# EUROPÄISCHE PATENTANMELDUNG

(11) **EP 2 711 796 A1**
(43) Veröffentlichungstag der Anmeldung: **26.03.2014**
(21) Anmeldenummer: 13004433.2
(22) Anmeldetag: 11.09.2013
(51) Int. Cl.: G05B 19/042, G06F 21/62

(54) **Zugriffskontrolle auf Bedienmodule einer Bedieneinheit**

(30) Priorität: 20.09.2012 CH 17082012
(71) Anmelder: Ferag AG, 8340 Hinwil (CH)
(72) Erfinder: Schüepp, Michael, 8303 Illnau (CH)
(74) Vertreter: Rentsch Partner AG

(57) **Zusammenfassung**

Die Erfindung betrifft eine Bedieneinheit (1) für eine Produktionsanlage (2). Die Bedieneinheit (1) umfasst ein Berechtigungsempfangsmodul (71), um Berechtigungskennungen (61, 62, 63, 64) zu empfangen, welche von Bedienmodulen (51, 52, 53, 54) der Bedieneinheit (1) ausgesendet werden, ein Berechtigungsspeichermodul (72), um in einem Berechtigungsdatenspeicher (8) Berechtigungsdaten mit Zuordnungen von Benutzerkennungen (31, 32, 33, 34, 41, 42) zu den empfangenen Berechtigungskennungen (61, 62, 63, 64) abzuspeichern, und ein Berechtigungsprüfmodul (73), um von den Bedienmodulen (51, 52, 53, 54) mindestens eine Berechtigungskennung (61, 62, 63, 64) zu empfangen sowie mindestens eine Benutzerkennung (31, 32, 33, 34, 41, 42) zu ermitteln und ein Bedienmodul (51, 52, 53, 54) freizuschalten, falls im Berechtigungsdatenspeicher (8) eine Zuordnung der mindestens einen Benutzerkennung (31, 32, 33, 34, 41, 42) zu der mindestens einen Berechtigungskennung (61, 62, 63, 64) abgespeichert ist.

## Beschreibung

### TECHNISCHES GEBIET

Die Erfindung bezieht sich auf eine Bedieneinheit für eine Produktionsanlage sowie auf ein Verfahren zum Betreiben einer Bedieneinheit für eine Produktionsanlage.

### STAND DER TECHNIK

Aus dem Stand der Technik sind Produktionsanlagen wie beispielsweise Produktverarbeitungsanlagen oder Druckproduktverarbeitungsanlagen bekannt. Dies sind hochkomplexe und weitläufige Anlagen, die je nach Anwendung in sehr grossen Bauten, oftmals in mehreren Gebäuden und Räumen, angeordnet sind. Das Bedienen von Produktionsanlagen erfolgt durch mindestens einen Benutzer und mindestens eine Bedieneinheit. Benutzer haben verschiedene Aufgaben. Es können Bedieneinheiten für einen Anlagenchef oder "Administrator" vorgesehen sein, welche eine umfassende Bedienung der Produktionsanlage ermöglicht. Es können Bedieneinheiten für "Servicepersonen" vorgesehen sein, welche nur gerade das Starten oder Stoppen bestimmter Anlagenbereiche ermöglichen, um Servicearbeiten durchführen zu können. Es können Bedieneinheiten für "Maschinenführer" vorgesehen sein, welche beispielsweise das Anpassen von Produktionsgeschwindigkeiten ermöglichen.

Der Unterhalt von Bedieneinheiten für verschiedene Aufgaben erfordert einen hohen Konfigurationsaufwand. Falls neue Bedienfunktionen zur Verfügung gestellt werden, beispielsweise durch das Hinzufügen von neuen Bedienmodulen zu der Bedieneinheit, ist wiederum ein hoher Konfigurationsaufwand notwendig, um alle Bedieneinheiten entsprechend anzupassen.

### DARSTELLUNG DER ERFINDUNG

Es ist eine Aufgabe der vorliegenden Erfindung eine Bedieneinheit für eine Produktionsanlage und ein Verfahren zum Betreiben einer Bedieneinheit für eine Produktionsanlage vorzuschlagen, welche zumindest gewisse Nachteile des Standes der Technik vermeiden oder reduzieren. Es ist insbesondere eine Aufgabe der vorliegenden Erfindung eine Bedieneinheit für eine Produktionsanlage und ein Verfahren zum Betreiben einer Bedieneinheit für eine Produktionsanlage vorzuschlagen, welche leicht konfiguriert werden können, wobei insbesondere Konfigurationsdaten auf verschiedenen Bedieneinheiten rasch nachführbar sind und konsistent bleiben.

Gemäss der vorliegenden Erfindung werden diese Ziele durch die Elemente der unabhängigen Ansprüche erreicht. Weitere vorteilhafte Ausführungsformen gehen ausserdem aus den abhängigen Ansprüchen und der Beschreibung hervor.

Eine Bedieneinheit für eine Produktionsanlage umfasst: ein Berechtigungsempfangsmodul, welches eingerichtet ist, Berechtigungskennungen zu empfangen, welche von Bedienmodulen der Bedieneinheit ausgesendet werden, ein Berechtigungsspeichermodul, welches eingerichtet ist, in einem Berechtigungsdatenspeicher Berechtigungsdaten mit Zuordnungen von Benutzerkennungen zu den empfangenen Berechtigungskennungen abzuspeichern, und ein Berechtigungsprüfmodul, welches eingerichtet ist, von den Bedienmodulen mindestens eine Berechtigungskennung zu empfangen sowie mindestens eine Benutzerkennung zu ermitteln und ein Bedienmodul, von welchem eine Berechtigungskennung empfangen wurde, einem durch die mindestens eine Benutzerkennung definierten Benutzer freizuschalten, falls im Berechtigungsdatenspeicher eine Zuordnung der mindestens einen Benutzerkennung zu der mindestens einen Berechtigungskennung abgespeichert ist. Durch die Bedienmodule werden aufgrund der Berechtigungskennung Bedienfunktionen für das Bedienen der Produktionsanlage festgelegt und vom Berechtigungsempfangsmodul gesammelt. Das Berechtigungsspeichermodul ordnet Benutzer über Benutzerkennungen den Berechtigungskennungen der Bedienmodule und somit bestimmten Funktionen der Bedienmodule zu. Beispielsweise beim Auslösen eines Bedienens der Produktionsanlage mit einem Bedienmodul der Bedieneinheit wird die Berechtigungskennung an das Berechtigungsprüfmodul übermittelt und es wird überprüft, ob der Zugriff durch den Benutzer freizuschalten oder nicht freizuschalten d.h. zu sperren ist. Da die Bedienmodule die Berechtigungskennungen selbständig verwalten, kann die Konfiguration der Bedieneinheit rasch vorgenommen werden.

In einer Ausführungsform ist das Berechtigungsprüfmodul eingerichtet, die mindestens eine Benutzerkennung aufgrund einer oder mehrerer der folgenden Vorgänge zu ermitteln: Anfrage der Benutzerkennung bei einem Benutzerkennungsmodul der Bedieneinheit, Empfang der Benutzerkennung von einem Benutzervalidierungsmodul der Bedieneinheit, Empfang der Benutzerkennung von einem Bedienmodul der Bedieneinheit. So kann beispielsweise die Benutzerkennung des aktuellen Benutzers der Bedieneinheit ermittelt werden und für das Freischalten von Bedienmodulen berücksichtigt werden. Das Benutzerkennungsmodul ist beispielsweise eingerichtet, die Benutzerkennung des aktuellen Benutzers der Bedieneinheit abzuspeichern, beispielsweise nachdem sich der Benutzer mit Benutzername und Passwort an der Bedieneinheit angemeldet hat. Das Benutzervalidierungsmodul ist beispielsweise eingerichtet, den aktuellen Benutzer der Bedieneinheit zu überprüfen, beispielsweise indem der Benutzer aufgefordert wird, Anmeldeinformationen wie z.B. ein Benutzername und ein Passwort anzugeben.

In einer Ausführungsform ist das Berechtigungsspeichermodul eingerichtet, mit einer Benutzerschnittstelle der Bedieneinheit zusammenzuwirken, um von einem Benutzer Angaben über die Zuordnung von Benutzerkennungen zu Berechtigungskennungen anzufordern und die Zuordnungen im Berechtigungsdatenspeicher entsprechend vorzunehmen. Die Konfiguration der Bedienmodule der Bedieneinheit kann direkt an der Bedieneinheit vorgenommen werden, wobei insbesondere durch eine nachfolgend beschriebene Synchronisierung von Konfigurationsdaten die Konfigurationsänderungen einer Vielzahl von Bedieneinheiten identisch und konsistent zur Verfügung stehen.

In einer Ausführungsform ist das Berechtigungsspeichermodul eingerichtet, im Berechtigungsdatenspeicher Berechtigungsdaten mit Zuordnungen von Benutzerkennungen zu den empfangenen Berechtigungskennungen als Zuordnungen von Benutzernamen zu Benutzerrollen sowie Zuordnungen von Benutzerrollen zu Berechtigungskennungen abzuspeichern. Dadurch lassen sich für Benutzergruppen die den Benutzern der Bedieneinheiten zur Verfügung stehenden Möglichkeiten zum Bedienen der Produktionsanlage effizient definieren.

In einer Ausführungsform ist das Berechtigungsspeichermodul eingerichtet, die im Berechtigungsdatenspeicher abgespeicherten Berechtigungsdaten vor missbräuchlicher Änderung mit einer elektronischen Signatur zu schützen. Die Benutzer der Bedieneinheiten können dadurch insbesondere nicht fälschlicherweise einen Zugriff auf ein Bedienmodul ermöglichen, welcher nicht vorgesehen ist.

In einer Ausführungsform umfasst die Bedieneinheit ein Synchronisationsmodul, welches eingerichtet ist, die im Berechtigungsdatenspeicher abgespeicherten Berechtigungsdaten mit Berechtigungsdaten zu synchronisieren, welche in einem örtlich entfernt angeordneten Berechtigungsdatenspeicher einer örtlich entfernt angeordneten Bedieneinheit abgespeichert sind. Die Berechtigungsdaten werden dadurch auf mehreren Bedieneinheiten der Produktionsanlage identisch zur Verfügung gestellt, wobei beispielsweise neue Bedienmodule, neue Berechtigungskennungen und/oder Benutzerkennungen von neuen Benutzern stets identisch und konsistent nachgeführt werden. Die Bedieneinheiten der Produktionsanlage werden an aktuelle Erweiterungen ohne grossen Konfigurationsaufwand nachgeführt.

In einer Ausführungsform umfasst die Bedieneinheit ein Master/Slave Register, welches eingerichtet ist, die Bedieneinheit als Master oder als Slave zu definieren, wobei das Synchronisationsmodul eingerichtet ist, im Fall einer als Master definierten Bedieneinheit die im Berechtigungsdatenspeicher abgespeicherten Berechtigungsdaten nur mit örtlich entfernt angeordneten Bedieneinheiten zu synchronisieren, welche als Slave definiert sind, und im Fall einer als Slave definierten Bedieneinheit die im Berechtigungsdatenspeicher abgespeicherten Berechtigungsdaten nur mit einer örtlich entfernt angeordneten Bedieneinheit zu synchronisieren, welche als Master definiert ist. Durch das Definieren eines einzigen Masters und von mehreren Slaves ist insbesondere eine eindeutige und schnelle Synchronisierung der Daten zwischen den Bedieneinheiten gewährleistet.

In einer Ausführungsform ist das Synchronisationsmodul eingerichtet, die Synchronisation zwischen der im Berechtigungsdatenspeicher abgespeicherten Berechtigungsdaten und in einem örtlich entfernt angeordneten Berechtigungsdatenspeicher abgespeicherten Berechtigungsdaten einer örtlich entfernt angeordneten Bedieneinheit aufgrund eines oder mehrerer der folgenden Ereignisse auszulösen: Ablauf eines Zeitintervalls, Empfang eines Triggersignals zur Synchronisation, Detektion von Änderungen von im Berechtigungsdatenspeicher abgespeicherten Berechtigungsdaten, Detektion der Verfügbarkeit des Zugriffs einer Netzwerkschnittstelle der Bedieneinheit auf ein Kommunikationsnetz. Nach Ablauf eines Zeitintervalls kann regelmässig eine Synchronisation durchgeführt werden, um die Konfigurationsdaten konsistent zu halten. Eine Einrichtung der Bedieneinheit kann explizit durch ein Triggersignal eine Synchronisation auslösen, beispielsweise nachdem ein Benutzermanager einen Benutzer mit neuen Benutzerkennungen hinzugefügt hat. Eine Detektion von Änderungen im Berechtigungsdatenspeicher kann beispielsweise durch einen Überwachungsprozess (watchdog) erfolgen, welcher in regelmässigen Intervallen eine Prüfsumme (Hash) der abgespeicherten Daten bestimmt und eine Synchronisation auslöst, falls sich die Prüfsumme ändert. Die Bedieneinheit kann nach einem Unterbruch eines Kommunikationsnetzwerks, beispielsweise bei einer mobilen Bedieneinheit mit einer funkbasierten Netzwerkschnittstelle, rasch wieder mit aktuellen Berechtigungsdaten versorgt werden, beispielsweise auch unmittelbar nach dem erneuten Einschalten der Bedieneinheit nach längerem Nichtgebrauch.

In einer Ausführungsform ist das Berechtigungsspeichermodul eingerichtet, nach dem Abspeichern von Berechtigungsdaten im Berechtigungsdatenspeicher dem Synchronisationsmodul ein Triggersignal zur Synchronisation der Berechtigungsdaten mit in einem Berechtigungsdatenspeicher abgespeicherten Berechtigungsdaten einer örtlich entfernt angeordneten Bedieneinheit zu übermitteln. Nachdem Berechtigungsdaten auf einer Bedieneinheit aktualisiert wurden, werden diese somit unmittelbar mit anderen Bedieneinheiten synchronisiert.

Neben einer Bedieneinheit für eine Produktionsanlage bezieht sich die Erfindung auf ein Verfahren zum Betreiben einer Bedieneinheit für eine Produktionsanlage, umfassend: Empfangen von Berechtigungskennungen, welche von Bedienmodulen der Bedieneinheit ausgesendet werden, Abspeichern von Berechtigungsdaten mit Zuordnungen von Benutzerkennungen zu den empfangenen Berechtigungskennungen in einem Berechtigungsdatenspeicher, und Empfangen von mindestens einer Berechtigungskennung von den Bedienmodulen sowie Ermitteln von mindestens einer Benutzerkennung und Freischalten eines Bedienmoduls, von welchem eine Berechtigungskennung empfangen wurde, für einen durch die mindestens eine Benutzerkennung definierten Benutzer, falls im Berechtigungsdatenspeicher eine Zuordnung der mindestens einen Benutzerkennung zu der mindestens einen Berechtigungskennung abgespeichert ist.

In einer Variante wird die mindestens eine Benutzerkennung aufgrund einer oder mehrerer der folgenden Vorgänge ermittelt: Anfrage der Benutzerkennung bei einem Benutzerkennungsmodul der Bedieneinheit, Empfang der Benutzerkennung von einem Benutzervalidierungsmodul der Bedieneinheit, Empfang der Benutzerkennung von einem Bedienmodul der Bedieneinheit.

In einer Variante werden durch das Zusammenwirken mit einer Benutzerschnittstelle der Bedieneinheit von einem Benutzer Angaben über die Zuordnung von Benutzerkennungen zu Berechtigungskennungen angefordert und die Zuordnungen im Berechtigungsdatenspeicher entsprechend vorgenommen.

In einer Variante werden im Berechtigungsdatenspeicher Berechtigungsdaten mit Zuordnungen von Benutzerkennungen zu den empfangenen Berechtigungskennungen als Zuordnungen von Benutzernamen zu Benutzerrollen sowie Zuordnungen von Benutzerrollen zu Berechtigungskennungen abgespeichert.

In einer Variante werden die im Berechtigungsdatenspeicher abgespeicherten Berechtigungsdaten vor missbräuchlicher Änderung mit einer elektronischen Signatur geschützt werden.

In einer Variante werden mit einem Synchronisationsmodul die im Berechtigungsdatenspeicher abgespeicherten Berechtigungsdaten mit Berechtigungsdaten synchronisiert, welche in einem örtlich entfernt angeordneten Berechtigungsdatenspeicher einer örtlich entfernt angeordneten Bedieneinheit abgespeichert sind.

In einer Variante wird die Bedieneinheit als Master oder als Slave definiert, wobei im Fall einer als Master definierten Bedieneinheit die im Berechtigungsdatenspeicher abgespeicherten Berechtigungsdaten nur mit örtlich entfernt angeordneten Bedieneinheiten synchronisiert werden, welche als Slave definiert sind, und im Fall einer als Slave definierten Bedieneinheit die im Berechtigungsdatenspeicher abgespeicherten Berechtigungsdaten nur mit einer örtlich entfernt angeordneten Bedieneinheit synchronisiert werden, welche als Master definiert ist.

In einer Variante wird im Synchronisationsmodul die Synchronisation zwischen der im Berechtigungsdatenspeicher abgespeicherten Berechtigungsdaten und in einem örtlich entfernt angeordneten Berechtigungsdatenspeicher abgespeicherten Berechtigungsdaten einer örtlich entfernt angeordneten Bedieneinheit aufgrund eines oder mehrerer der folgenden Ereignisse ausgelöst: Ablauf eines Zeitintervalls, Empfang einer Triggers zur Synchronisation, Detektion von Änderungen von im Berechtigungsdatenspeicher abgespeicherten Berechtigungsdaten, Detektion der Verfügbarkeit des Zugriffs einer Netzwerkschnittstelle der Bedieneinheit auf ein Kommunikationsnetz.

In einer Variante wird nach dem Abspeichern von Berechtigungsdaten im Berechtigungsdatenspeicher dem Synchronisationsmodul einen Trigger zur Synchronisation der Berechtigungsdaten mit in einem Berechtigungsdatenspeicher abgespeicherten Berechtigungsdaten einer örtlich entfernt angeordneten Bedieneinheit übermittelt.

Neben einer Bedieneinheit für eine Produktionsanlage und einem Verfahren zum Betreiben einer Bedieneinheit für eine Produktionsanlage bezieht sich die Erfindung überdies auf ein Computerprogrammprodukt, umfassend ein greifbares computerlesbares Speichermedium mit gespeichertem Computercode, welcher eingerichtet ist, einen oder mehrere Prozessoren einer Bedieneinheit für eine Produktionsanlage so zu steuern, dass: Berechtigungskennungen, welche von Bedienmodulen der Bedieneinheit ausgesendet werden, empfangen werden, Berechtigungsdaten mit Zuordnungen von Benutzerkennungen zu den empfangenen Berechtigungskennungen in einem Berechtigungsdatenspeicher abgespeichert werden, und von den Bedienmodulen mindestens eine Berechtigungskennung empfangen wird sowie mindestens eine Benutzerkennung ermittelt wird und ein Bedienmodul, von welchem eine Berechtigungskennung empfangen wurde, für einen durch die mindestens eine Benutzerkennung definierten Benutzer freigeschaltet wird, falls im Berechtigungsdatenspeicher eine Zuordnung der mindestens einen Benutzerkennung zu der mindestens einen Berechtigungskennung abgespeichert ist.

### KURZE BESCHREIBUNG DER ZEICHNUNGEN

Anhand von Figuren, welche lediglich Ausführungsbeispiele darstellen, wird die Erfindung im Folgenden erläutert. Es zeigen:
- Fig. 1: schematisch Bedieneinheiten mit Bedienmodulen und einer Zuordnung zwischen Benutzerkennungen, umfassend Benutzernamen und Benutzerrollen, und Berechtigungskennungen der Bedienmodule;
- Fig. 2: schematisch Bedieneinheiten mit Bedienmodulen, wobei Bedienmodule der Bedieneinheiten gemäss Benutzerkennungen und Berechtigungskennungen freigeschaltet werden; und
- Fig. 3: ein Flussdiagramm mit einer Sequenz möglicher Schritte zum Betreiben einer Bedieneinheit für eine Produktionsanlage.

### WEG(E) ZUR AUSFÜHRUNG DER ERFINDUNG

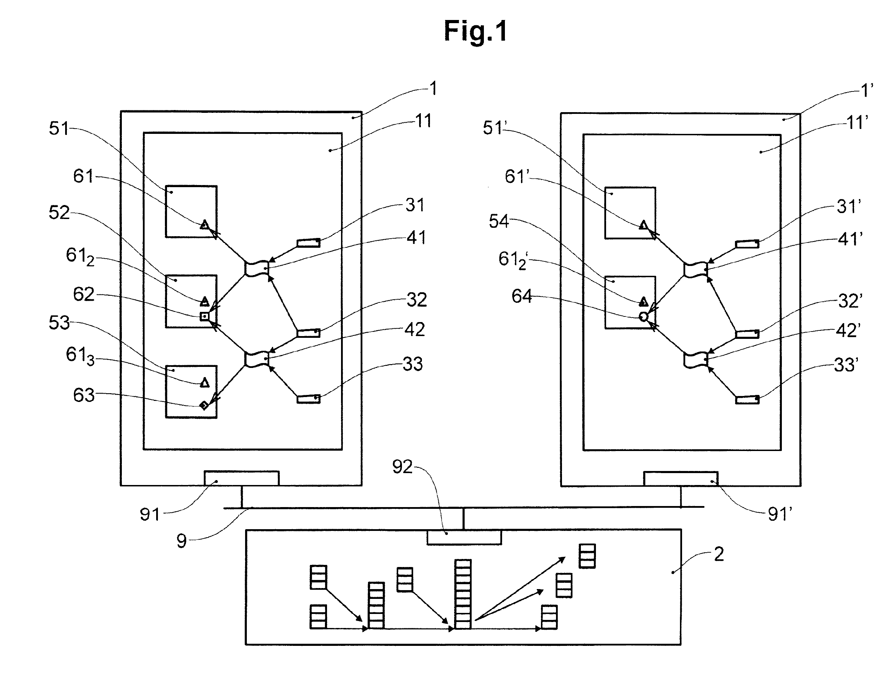

Figur 1 zeigt eine erste Bedieneinheit 1 und eine zweite Bedieneinheit 1', welche für das Bedienen einer Produktionsanlage 2 eingerichtet sind. Die Bedieneinheiten 1, 1' weisen beispielsweise Netzwerkschnittstellen 91, 91' auf, welche zur Verbindung mit einem Kommunikationsnetz 9 eingerichtet sind. Die Produktionsanlage 2 weist beispielsweise eine Netzwerkschnittstelle 92 auf, welche ebenfalls zur Verbindung mit dem Kommunikationsnetz 9 eingerichtet ist. Über das Kommunikationsnetz 9 sind somit Kommunikationsverbindungen zwischen den Bedieneinheiten 1, 1' und der Produktionsanlage 2 erstellbar, insbesondere für das Bedienen der Produktionsanlage 2 durch die Bedieneinheiten 1, 1'.

Die Netzwerkschnittstellen 91, 91', 92 der Bedieneinheiten 1, 1' und der Produktionsanlage 2 betreffen in einer Ausführungsform kabelgebundene Netzwerkschnittstellen, wie beispielsweise Ethernet-Schnittstellen, drahtlose Schnittstellen, wie beispielsweise WLAN Schnittstellen nach einem IEEE 802.11a/b/g/n/y Standard (WLAN: Wireless Local Area Network, IEEE: Institute of Electrical and Electronics Engineers) oder Bluetooth-Schnittstellen, oder irgendwelche andere Kommunikationsschnittstellen. Das Kommunikationsnetz 9 weist Netzwerkeinrichtungen wie z.B. Ethernet-Kabel, Ethernet-Switches, Ethernet-Router, WLAN-Router, Bluetooth-Schnittstellen, etc. auf.

In einer Variante sind neben der ersten Bedieneinheit 1 und der zweiten Bedieneinheit 1' weitere Bedieneinheiten vorgesehen, welche gleich oder ähnlich wie die erste und zweite Bedieneinheit 1, 1' ausgeführt sind. Mit der Bezeichnung "Bedieneinheiten 1 , 1'" sind vorliegend jeweils eine oder mehrere dieser Bedieneinheiten bezeichnet. In einer Variante umfassen die Bedieneinheiten 1, 1' stationäre Bedieneinheiten und/oder mobile Bedieneinheiten. In einer Ausführungsform weist eine stationäre Bedieneinheit einen grossflächigen Touchscreen auf, beispielsweise einen 40 Zoll Touchscreen, einen 46 Zoll Touchscreen oder einen Touchscreen irgendeiner anderen Grösse. In einer Variante weist eine mobile Bedieneinheit 1, 1' einen kleinflächigen Touchscreen auf, beispielsweise einen 7 Zoll Touchscreen, einen 10 Zoll Touchscreen oder einen Touchscreen irgendeiner anderen Grösse. In einer Ausführungsform umfassen die Bedieneinheiten 1, 1' einen oder mehrere Personal Computer (PC), einen oder mehrere Laptop-Computer, ein oder mehrere Mobilfunkgeräte, ein oder mehrere Tablet-Computer, etc.

In einer Ausführungsvariante weisen die Bedieneinheiten 1, 1' mehrere Netzwerkschnittstellen auf und das Netzwerk 9 ist beispielsweise unterteilt in ein erstes Netzwerk für die Kommunikation zwischen den Bedieneinheiten 1, 1' unter sich und in ein zweites Netzwerk für die Kommunikation zwischen den Bedieneinheiten 1, 1' und der Produktionsanlage 2.

Beispielsweise verfügen die Bedieneinheiten 1, 1' über Netzwerkschnittstellen für die Verbindung zum ersten Netzwerk und über Netzwerkschnittstellen für die Verbindung zum zweiten Netzwerk. In einer Variante ist beispielsweise das zweite Netzwerk robuster ausgeführt als das erste Netzwerk, wodurch sich für die Kommunikation zwischen den Bedieneinheiten 1, 1' und der Produktionsanlage 2 eine höhere Verbindungssicherheit ergibt als für die Kommunikation zwischen den Bedieneinheiten 1, 1' untereinander.

Die Bedieneinheiten 1, 1' weisen mehrere Funktionsmodule auf, welche vorzugsweise als programmierte Softwaremodule ausgeführt sind und Computerprogrammcode umfassen zur Steuerung von einem oder mehreren Prozessoren der Bedieneinheiten 1, 1'. Der Computerprogrammcode ist auf einem oder mehreren fest oder entfernbar mit den Prozessoren verbindbaren computerlesbaren Speichermedien gespeichert. Der Fachmann wird jedoch verstehen, dass die Funktionsmodule in alternativen Ausführungsvarianten teilweise oder vollständig durch Hardwarekomponenten ausgeführt werden können.

Die Bedieneinheiten 1, 1' weisen Benutzerschnittstellen auf, welche insbesondere Eingabe-/Ausgabeeinrichtungen umfassen, wie beispielsweise einen Touchscreen, eine Tastatur, einen Display, eine Kamera, ein Mikrofon, einen Lautsprecher, etc. Je nach Anwendung oder Benutzervorgabe sind die Benutzerschnittstellen der Bedieneinheiten 1, 1' als grafische Benutzerschnittstellen, als sprachbasierte Benutzerschnittstellen, als gestenbasierte Benutzerschnittstellen etc. eingerichtet.

Bei einer grafischen Benutzerschnittstelle wird beispielsweise ein Bedienbefehl zum Bedienen der Produktionsanlage 2 auf einem Touchscreen oder Display der Bedieneinheit angezeigt und durch den Benutzer mit der Berührung eines Touchscreens an der entsprechenden Stelle oder mit dem Betätigen von einer oder mehreren Tasten einer Tastatur ausgelöst.

Bei einer akustischen Benutzerschnittstelle erfolgt beispielsweise die Auslösung eines Bedienbefehls zum Bedienen der Produktionsanlage 2 durch das Aussprechen von Sätzen oder gesprochenen Kommandos.

Bei einer gestenbasierten Benutzerschnittstelle erfolgt beispielsweise die Auslösung eines Bedienbefehls zum Bedienen der Produktionsanlage 2 durch Gesten wie insbesondere Fingergesten, Handgesten, Armgesten, etc.

Die Bedieneinheiten 1, 1' sind eingerichtet, eine oder mehrere Applikationen 11, 11' auszuführen, welche eines oder mehrere Bedienmodule 51, 52, 53, 54 umfassen. In einer Ausführungsform werden die Bedienmodule 51, 52, 53, 54 statt innerhalb einer Applikation 11, 11' auf irgendeine andere Weise auf den Bedieneinheiten 1, 1' ausgeführt, beispielsweise als eigenständige Prozesse oder Applikationen.

Eines oder mehrere Bedienmodule 51, 52, 53, 54 sind in einer Ausführungsvariante auf mehreren Bedieneinheiten 1, 1' identisch vorhanden. So ist beispielsweise in Figur 1 ein Bedienmodul mit dem Bezugszeichen 51 der Bedieneinheit mit dem Bezugszeichen 1 schematisch dargestellt, welches zum Bedienmodul mit dem Bezugszeichen 51' der Bedieneinheit mit dem Bezugszeichen 1' identisch ist. Mit dem Bedienmodul mit dem Bezugszeichen 51 und dem Bedienmodul mit dem Bezugszeichen 51' können somit zum Bedienen der Produktionsanlage 2 dieselben Funktionen, Aufgaben, etc. durchgeführt werden.

Die Bedienmodule 51, 52, 53, 54 sind beispielsweise eingerichtet, Benutzerbefehle im Zusammenwirken mit einer Benutzerschnittstelle der Bedieneinheiten 1, 1' und somit mit einem oder mehreren Benutzern der Bedieneinheit 1 zu erzeugen und an die Produktionsanlage 2 zu übermitteln, womit beispielweise Bedienfunktionen, Überwachungsfunktionen, Steuerungsfunktionen, etc ausgelöst werden.

In einer Ausführungsform weisen eines oder mehrere Bedienmodule 51, 52, 53, 54 eine oder mehrere Schnittstellen zum Senden und/oder Empfangen von Daten auf, welche eingerichtet sind, Daten mit einer Eingabe-/Ausgabeeinrichtung der Bedieneinheiten 1 , 1', mit einer Produktionsanlage 2, mit Bedienmodulen 51, 52, 53, 54, oder mit irgendwelchen anderen Einrichtungen auszutauschen.

Beispielsweise ist ein Bedienmodul 51, 52, 53, 54 eingerichtet, Daten welche eine Liste mit zulässigen Bedienbefehlen umfassen an eine Eingabe-/Ausgabeeinrichtung der Bedieneinheit 1, 1' auf welcher das Bedienmodul 51, 52, 53, 54 abläuft zu übertragen. Die Eingabe-/Ausgabeeinrichtung der betreffenden Bedieneinheit 1, 1' ist beispielsweise eingerichtet, dem Benutzer die Liste mit den zur Verfügung stehenden Bedienbefehlen anzuzeigen, den Benutzer zur Auswahl eines oder mehrerer Bedienbefehle aufzufordern und Daten betreffend den oder die durch den Benutzer ausgewählten Bedienbefehle an das betreffende Bedienmodul 51, 52, 53, 54 zu übermitteln. Das betreffende Bedienmodul 51, 52, 53, 54 ist beispielsweise eingerichtet, das Bedienen der Produktionsanlage 2 entsprechend diesem Bedienbefehl vorzunehmen.

Das Bedienen der Produktionsanlage 2 umfasst beispielsweise das Starten oder Stoppen von Einrichtungen der Produktionsanlage, beispielsweise das Starten oder Stoppen eines Zuförderers einer Druckproduktverarbeitungsanlage. Das Bedienen der Produktionsanlage 2 umfasst beispielsweise das Einstellen einer Geschwindigkeit einer Einrichtung der Produktionsanlage, beispielsweise das Einstellen der Geschwindigkeit eines Förderers einer Druckproduktverarbeitungsanlage. Das Bedienen der Produktionsanlage 2 umfasst beispielsweise das Einschalten einer Hilfsvorrichtung der Produktionsanlage 2, beispielsweise das Einschalten einer Beleuchtung. Das Bedienen der Produktionsanlage 2 umfasst ferner irgendwelche andere für das Bedienen der Produktionsanlage 2 erforderliche Aktionen, Funktionen, etc.

Wie aus Figur 1 ersichtlich ist, weisen die mehreren Bedienmodule 51, 52, 53, 54, also beispielsweise ein erstes Bedienmodul 51, ein zweites Bedienmodul 52, ein drittes Bedienmodul 53 und ein viertes Bedienmodul 54, je eine oder mehrere Berechtigungskennungen 61, 62, 63, 64 auf. Die Berechtigungskennungen 61, 62, 63, 64, beispielsweise eine erste Berechtigungskennung 61, eine zweite Berechtigungskennung 62, eine dritte Berechtigungskennung 63 und eine vierte Berechtigungskennung 64, legen die Berechtigung für den Zugriff eines Benutzers auf die betreffenden Bedienmodule 51, 52, 53, 54 fest.

In einer Ausführungsvariante sind die Berechtigungskennungen 61, 62, 63, 64 in einem Speicher des betreffenden Bedienmoduls 51, 52, 53, 54 abgespeichert. In einer Ausführungsform umfassen die Berechtigungskennungen 61, 62, 63, 64 einen Benutzernamen, eine Benutzerrolle oder irgendeine andere Kennung. Der Benutzername, die Benutzerrolle oder eine andere Kennung sind beispielsweise in der Form einer UID (User Identification), einer GID (Group Identification), einer Zeichenkette oder in irgendeiner anderen Form abgespeichert.

Die Bedieneinheiten 1, 1' umfassen unterschiedliche oder identische Bedienmodule 51, 52, 53, 54. Beispielsweise sind zwei erste Bedienmodule 51, 51' vorgesehen, welche auf der ersten Bedieneinheit 1 und auf der zweiten Bedieneinheit 1' identisch ausgeführt sind und insbesondere auch zwei identische Berechtigungskennungen 61, 61' aufweisen. Die erste Bedieneinheit 1 und die zweite Bedieneinheit 1' sind eingerichtet, die entsprechend den zwei ersten Bedienmodulen 51, 51' vorgesehenen Funktionen zum Bedienen der Produktionsanlage 2 identisch durchzuführen.

Auf der ersten Bedieneinheit 1 ist beispielsweise ein zweites Bedienmodul 52 und ein drittes Bedienmodul 53 vorgesehen, während auf der zweiten Bedieneinheit 1' ein viertes Bedienmodul 54 vorgesehen ist. Somit ist die erste Bedieneinheit 1 eingerichtet, die entsprechend dem zweiten Bedienmodul 52 und dem dritten Bedienmodul 53 vorgesehenen Funktionen zum Bedienen der Produktionsanlage 2 durchzuführen, während die zweite Bedieneinheit 1' eingerichtet ist, die entsprechend dem vierten Bedienmodul 54 vorgesehenen Funktionen zum Bedienen der Produktionsanlage 2 durchzuführen. Wie in Figur 1 schematisch dargestellt, weist das zweite Bedienmodul 52 eine weitere erste Berechtigungskennung 61₂ und die zweite Berechtigungskennung 62 auf, während das dritte Bedienmodul 53 noch eine weitere erste Berechtigungskennung 61₃ und eine dritte Berechtigungskennung 63 aufweist. Die erste Berechtigungskennung 61, die weitere erste Berechtigungskennung 61₂ und die noch weitere erste Berechtigungskennung 61₃ haben einen identischen Dateninhalt oder den gleichen Informationsinhalt.

Mit den Berechtigungskennungen 61, 62, 63, 64 wird der Zugriff auf die Bedienmodule 51, 52, 53, 54 festgelegt. Wie aus Figur 1 ersichtlich, ist der Zugriff auf die beiden ersten Bedienmodule 51, 51' der ersten Bedieneinheit 1 und der zweiten Bedieneinheit 1' durch die beiden ersten Berechtigungskennungen 61, 61' definiert. Der Zugriff auf das zweite Bedienmodul 52 der ersten Bedieneinheit 1 ist durch die weitere erste Berechtigungskennung 61₂ sowie die zweite Berechtigungskennung 62 definiert. Der Zugriff auf das dritte Bedienmodul 53 der ersten Bedieneinheit 1 ist durch die noch weitere erste Berechtigungskennung 61₃ und die dritte Berechtigungskennung 63 definiert. Somit ist einem Benutzer, welchem der gemäss der ersten Berechtigungskennung 61 definierte Zugriff auf das erste Bedienmodul 51 ermöglicht ist, ebenfalls der Zugriff auf das zweite Bedienmodul 52 und auf das dritte Bedienmodul 53 ermöglicht. Für die Bedienmodule 51', 54 der zweiten Bedieneinheit 1' ist wie in Figur 1 schematisch dargestellt eine entsprechende Beschreibung anzuwenden.

Wie aus Figur 1 ersichtlich ist, sind auf den Bedieneinheiten 1, 1' als Benutzerkennung Benutzernamen 31, 31', 32, 32', 33, 33' und Benutzerrollen 41, 41', 42, 42', 43, 43' abgespeichert.

Die Benutzernamen 31, 31', 32, 32', 33, 33' umfassen beispielsweise den Namen und Vornamen eines Benutzers, eine UID (User Identification), etc. Ggf. umfasst der Benutzername eine fortlaufende Nummer zur Vermeidung von Kollisionen zwischen Benutzern mit dem gleichen Namen und Vornamen.

Die Benutzerrollen 41, 41', 42, 42', 43, 43' umfassen beispielsweise eine Rollenbeschreibung, eine GID (Group Identification), etc. Eine Rollenbeschreibung ist beispielsweise durch eine kurze Beschreibung von Bedienaufgaben gebildet, wie z.B. "Administrator", "Serviceperson", "Maschinenführer", "Lehrling", etc. Mit den Rollenbeschreibungen werden beispielsweise Bedienaufgaben zum Bedienen der Produktionsanlage zusammengefasst und definiert, über welche Zugriffsmöglichkeiten ein Benutzer der Bedieneinheit 1, 1', welchem eine bestimmte Benutzerrolle zugewiesen ist, auf Bedienmodule 51, 52, 53, 54 der Bedieneinheit 1, 1' verfügt.

Wie aus Figur 1 ersichtlich ist, wird in einer Ausführungsform eine Zuordnung der Benutzernamen 31, 31', 32, 32', 33, 33' zu Benutzerrollen 41, 41', 42, 42' und eine Zuordnung der Benutzerrollen 41, 41', 42, 42' zu einem oder mehreren Berechtigungskennungen 61, 62, 63, 64 definiert. Um festzustellen, über welche Zugriffmöglichkeiten ein Benutzer verfügt, kann somit einerseits dessen Benutzername oder andererseits die Benutzerrolle herangezogen werden, wobei beim Heranziehen der Benutzerrolle die Berechtigungskennungen 61, 62, 63, 64 besonders rasch ermittelt werden können.

Beispielsweise ergibt sich für die erste Bedieneinheit 1 gemäss Figur 1 die Zuordnung zwischen den Benutzernamen mit den Bezugszeichen 31, 32, 33, den Benutzerrollen mit den Bezugszeichen 41, 42, den Berechtigungskennungen mit den Bezugszeichen 61, 62, 63, 64 und den Bedienmodulen mit den Bezugszeichen 51, 52, 53 gemäss den nachfolgenden Zuordnungstabellen Z1, Z2, Z3:

| | | | | | | | | |
|---|---|---|---|---|---|---|---|---|
| Z1: | 31: | 41 | Z2: | 41: | 61, 62 | Z3: | 61: | 51, 52, 53 |
| | 32: | 41, 42 | | 42: | 62, 63 | | 62: | 52 |
| | 33: | 42 | | | | | 63: | 53 |

Somit ist im Beispiel gemäss Figur 1 dem Benutzer mit dem Benutzernamen mit dem Bezugszeichen 31 die Rolle mit der Benutzerrolle mit dem Bezugszeichen 41 zugeordnet. Der Benutzerrolle mit dem Bezugszeichen 41 sind die Berechtigungskennungen mit den Bezugszeichen 61, 62 zugeordnet. Dementsprechend nimmt der Benutzer mit dem Bezugszeichen 31 die Rolle mit dem Bezugzeichen 41 an und ist in der Lage, die Funktionen derjenigen Bedienmodule 51, 52, 53 auszulösen, welche ein Berechtigungskennung mit dem Bezugszeichen 61 oder ein Berechtigungskennung mit dem Bezugszeichen 62 aufweisen. In Figur 1 weisen die Bedienmodule mit den Bezugszeichen 51, 52, 53 die Berechtigungskennung mit dem Bezugszeichen 61 resp. 61₂, , 61₃ auf und das Bedienmodul mit dem Bezugszeichen 52 weist die Berechtigungskennung mit dem Bezugszeichen 62 auf. Dem Benutzer mit Bezugszeichen 31, welcher die Rolle mit dem Bezugszeichen 41 hat, ist somit der Zugriff auf die Bedienmodule mit den Bezugszeichen 51, 52, 53 gewährt.

Demgegenüber ist gemäss den Zuordnungstabellen Z1, Z2 resp. gemäss Figur 1 dem Benutzer mit dem Benutzer mit dem Bezugszeichen 32 die Rolle mit der Benutzerrolle mit dem Bezugszeichen 41 und die Benutzerrolle mit dem Bezugszeichen 42 zugeordnet. Wie aus den Zuordnungstabellen Z2, Z3 und der Figur 1 ersichtlich, verfügt somit der Benutzer, welcher dem Benutzernamen mit dem Bezugszeichen 32 zugeordnet ist, über die Berechtigung, die Funktionen aller Bedienmodule 51, 52, 53 der Bedieneinheit 1 auszuführen.

In einer Ausführungsvariante ist es vorgesehen, die Produktionsanlage 2 abhängig von der Berechtigungskennung 61, 62, 63, 64 unterschiedlich zu bedienen. Wird beispielsweise der Zugriff auf das Bedienmodul mit dem Bezugszeichen 52 aufgrund der Berechtigungskennung mit dem Bezugszeichen 61₂ gewährt, erfolgt das Bedienen der Produktionsanlage 2 auf eine andere Weise als falls der Zugriff aufgrund der Berechtigungskennung mit dem Bezugszeichen 62 erfolgt. So kann beispielsweise der eine Fall nur das Starten oder Stoppen eines Maschinenteils der Produktionsanlage betreffen, während im anderen Fall zusätzlich oder alternativ eine Geschwindigkeitseinstellung ermöglicht ist.

In einer Ausführungsvariante ist es vorgesehen, den Zugriff auf ein Bedienmodul 51, 52, 53, 54 nur zu gewähren, falls alle Berechtigungskennungen 61, 62, 63, 64 des betreffenden Bedienmoduls 51, 52, 53, 54 kumulativ erfüllt sind. So kann beispielsweise in Figur 1 der Zugriff auf das Bedienmodul mit dem Bezugszeichen 53 für Rollen mit der Benutzerrolle mit dem Bezugszeichen 42 gesperrt sein, da nur die Berechtungskennung mit dem Bezugszeichen 63 aber nicht die Berechtigungskennung mit dem Bezugszeichen 61₃ dieser Rolle zugeordnet ist.

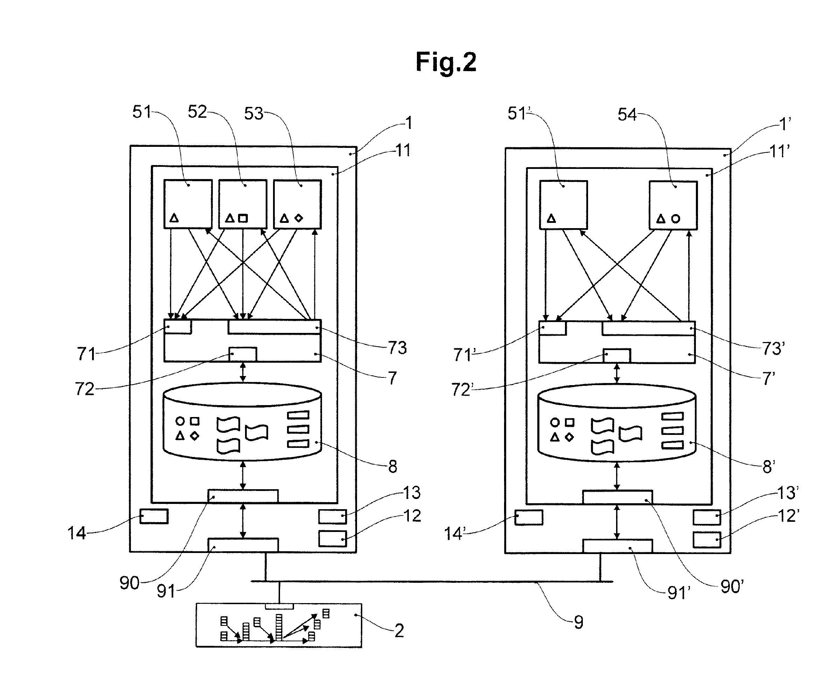

Figur 2 zeigt schematisch Bedieneinheiten 1, 1', welche je einen Zugriffskontroller 7, 7' aufweisen. Nachfolgend wird der Zugriffskontroller mit dem Bezugszeichen 7 der Bedieneinheit mit dem Bezugszeichen 1 beschrieben. Der Zugriffskontroller mit dem Bezugszeichen 7' ist entsprechend aufgebaut. Der Zugriffskontroller 7 weist ein Berechtigungsempfangsmodul 71, ein Berechtigungsspeichermodul 72 und ein Berechtigungsprüfmodul 73 auf. In einer Ausführungsvariante sind das Berechtigungsempfangsmodul 71, das Berechtigungsspeichermodul 72 und das Berechtigungsprüfmodul 73 statt im Zugriffskontroller 7 in irgendeiner anderen Weise in der Bedieneinheit 1 angeordnet.

Wie aus Figur 2 ersichtlich weist die Bedieneinheit 1 ein Berechtigungsempfangsmodul 71 auf welches eingerichtet ist, von einem oder mehreren Bedienmodulen 51, 52, 53, 54 ein oder mehrere vom betreffenden Bedienmodul 51, 52, 53, 54 ausgesendete Berechtigungskennungen 61, 62, 63, 64 zu empfangen. Die Kommunikation zwischen den Bedienmodulen 51, 52, 53, 54 und dem Berechtigungsempfangsmodul 71 erfolgt beispielsweise über Interprozess Kommunikationsdienste eines Betriebssystems, über das Abspeichern und Lesen der Daten in einem Filesystem, etc. Die Berechtigungskennungen 61, 62, 63, 64 umfassen beispielsweise einen Identifikator, beispielsweise vom Datentyp Integer, eine Beschreibung von Bedienfunktionen, welche dem betreffenden Berechtigungskennung 61, 62, 63, 64 zugeordnet sind, oder irgendwelche andere Informationen.

Wie aus Figur 2 ersichtlich weist die Bedieneinheit 1 ein Berechtigungsspeichermodul 72 auf, welches eingerichtet ist, in einem Berechtigungsdatenspeicher 8 der Bedieneinheit 1 Berechtigungsdaten mit Zuordnungen von Benutzerkennungen 31, 32, 33, 34, 41, 42 zu den empfangenen Berechtigungskennungen 61, 62, 63, 64 abzuspeichern.

Die Benutzerkennungen 31, 32, 33, 34 werden beispielsweise vorgängig im Berechtigungsdatenspeicher abgespeichert, um mögliche Benutzer zu definieren. Die empfangenen Berechtigungskennungen 61, 62, 63, 64 werden anschliessend den verfügbaren Benutzerkennungen zugeordnet abgespeichert. Beispielsweise wird in einer Zuordnungstabelle die Berechtigungskennung mit dem Bezugszeichen 61 der Benutzerkennung mit dem Bezugszeichen 31 zugeordnet, wodurch definiert wird, dass der Benutzer welchem die Benutzerkennung mit dem Bezugszeichen 31 zugeordnet ist die Berechtigung hat, wie in Figur 1 dargestellt die dem Berechtigungskennung 61 zugeordneten Funktionen der Bedienmodule 51, 52, 53 auszuführen.

In einer Ausführungsvariante umfasst der Berechtigungsdatenspeicher 8 einen nichtflüchtigen Speicher der Bedieneinheit 1, wobei die abgespeicherten Berechtigungsdaten beim Ausschalten und wieder Einschalten der Bedieneinheit erhalten bleiben. Der nichtflüchtige Speicher ist in einer Variante als Harddisk, als Speicherkarte wie z.B. einer SD-Speicherkarte (SD: Secure Digital), als SSD (SSD: Solid State Disk), etc. ausgeführt.

Wie aus Figur 2 ersichtlich weist die Bedieneinheit 1 ein Berechtigungsprüfmodul 73 auf welches eingerichtet ist, von den Bedienmodulen 51, 52, 53, 54 mindestens eine Berechtigungskennung 61, 62, 63, 64 zu empfangen sowie mindestens eine Benutzerkennung 31, 32, 33, 34, 41, 42 zu ermitteln und ein Bedienmodul 51, 52, 53, 54, von welchem eine Berechtigungskennung 61, 62, 63, 64 empfangen wurde, einem durch die mindestens eine Benutzerkennung 31, 32, 33, 34, 41, 42 definierten Benutzer freizuschalten, falls im Berechtigungsdatenspeicher 8 eine Zuordnung der mindestens einen Benutzerkennung 31, 32, 33, 34, 41, 42 zu der mindestens einen Berechtigungskennung 61, 62, 63, 64 abgespeichert ist. Beispielsweise umfasst die mindestens eine Benutzerkennung 31, 32, 33, 34 einen Benutzernamen und es wird überprüft, ob im Berechtigungsdatenspeicher 8 eine Zuordnung des Benutzernamens 31, 32, 33, 34 zu der mindestens einen Berechtigungskennung 61, 62, 63, 64 abgespeichert ist. In einer Variante umfasst die Benutzerkennung eine Benutzerrolle 41, 42 und es wird überprüft, ob im Berechtigungsdatenspeicher 8 eine Zuordnung der Benutzerrolle 41, 42 zu der mindestens einen Berechtigungskennung 61, 62, 63, 64 abgespeichert ist.

In einer Ausführungsvariante wird der Benutzername 31, 32, 33, 34 und/oder die Benutzerrolle 41, 42 durch ein Benutzervalidierungsmodul 13 ermittelt, sobald ein Benutzer die Bedieneinheit 1 zum Bedienen der Produktionsanlage 2 benutzt. Der Benutzername 31, 32, 33, 34 und/oder die Benutzerrolle 41, 42 wird für spätere Abfragen z.B. in einem Benutzerkennungsmodul 12 der Bedieneinheit 1 abgespeichert. In einer Variante wird der Benutzername 31, 32, 33, 34 und/oder die Benutzerrolle 41, 42 durch das Benutzervalidierungsmodul 13 an das Berechtigungsprüfmodul 73 übertragen, welches für den Empfang dieser Daten eingerichtet ist. In einer weiteren Variante wird der Benutzername 31, 32, 33, 34 und/oder die Benutzerrolle 41, 42 durch ein Bedienmodul 51, 52, 53, 53 an das Berechtigungsprüfmodul 73 übertragen. Das Ermitteln des Benutzernamens 31, 32, 33, 34 und/oder der Benutzerrolle 41, 42 erfolgt beispielsweise mit Identifikationsdaten wie dem Benutzernamen/Passwort, Fingerabdruck, Gesichtserkennung, etc., welche mit Eingabemitteln, einem Fingerabrucklesegerät, einer Kamera, etc. der Bedieneinheit 1 erfasst werden

In einer Ausführungsvariante ist das Berechtigungsspeichermodul 72 eingerichtet, im Berechtigungsdatenspeicher 8 Berechtigungsdaten mit Zuordnungen von Benutzerkennungen 31, 32, 33, 34, 41, 42 zu den empfangenen Berechtigungskennungen 61, 62, 63, 64 als Zuordnungen von Benutzernamen 31, 32, 33, 34 zu Benutzerrollen 41, 42 sowie Zuordnungen von Benutzerrollen 41, 42 zu Berechtigungskennungen 61, 62, 63, 64 abzuspeichern. Einer Benutzerrolle sind eine Rolle des Benutzers und damit Bedienaufgaben eines Benutzers beim Bedienen der Produktionsanlage 2 zugeordnet ist. Als Rollen sind beispielsweise "Administrator", "Serviceperson", "Maschinenführer", "auszubildende Person", etc. definiert. Aus der Benutzerrolle 41, 42 wird ermittelt, auf welche Bedienmodule 51, 52, 53, 54 ein Benutzer aufgrund deren Berechtigungskennungen 61, 62, 63, 64 Zugriff hat.

In einer Ausführungsvariante übermittelt das Berechtigungsprüfmodul 73 einem Bedienmodul 51, 52, 53, 54 eine Signalisierung, ob der Zugriff auf die Bedienfunktion erlaubt ist oder nicht und das Bedienmodul 51, 52, 53, 54 führt die entsprechende Bedienfunktion aus, sobald es die betreffende Signalisierung empfängt. In einer Variante übermittelt das Bedienmodul den Bedienbefehl zusammen mit der Benutzerkennung 31, 32, 33, 34, 41, 42 und/oder der Berechtigungskennung 61, 62, 63, 64 an das betreffende Bedienmodul 51, 52, 53, 54, welches dann selbständig oder zusätzlich überprüft, ob der Bedienbefehl an die Produktionsanlage 2 weiterzuleiten ist oder nicht.

In einer Ausführungsvariante umfasst die Bedieneinheit 1 ein Synchronisationsmodul 90 welches eingerichtet ist, die im Berechtigungsdatenspeicher 8 abgespeicherten Berechtigungsdaten mit Berechtigungsdaten zu synchronisieren, welche in einem örtlich entfernt angeordneten Berechtigungsdatenspeicher 8' einer örtlich entfernt angeordneten Bedieneinheit 1' abgespeichert sind. Das Synchronisationsmodul 90 ist beispielsweise eingerichtet, eine Kommunikationsverbindung zwischen dem Synchronisationsmodul 90 und einem entsprechenden Synchronisationsmodul 90' der örtlich entfernt angeordneten Bedieneinheit 1' zu erstellen. Die beiden Synchronisationsmodule 90, 90' sind beispielsweise eingerichtet, Berechtigungsdaten des Berechtigungsdatenspeichers 8 mit Berechtigungsdaten des örtlich entfernt angeordneten Berechtigungsdatenspeichers 8' zu vergleichen und falls ein Unterschied festgestellt wird die Daten aufgrund von Regeln wie beispielsweise einem Zeitstempel, einer Löschtabelle, etc. vom einen auf den anderen Berechtigungsdatenspeicher 8, 8' zu kopieren, zu überschreiben, zu löschen, etc.

In einer Ausführungsvariante umfasst die Bedieneinheit 1 ein Master/Slave Register 14 welches eingerichtet ist, die Bedieneinheit 1 als Master oder als Slave zu definieren, wobei das Synchronisationsmodul 90 eingerichtet ist, im Fall einer als Master definierten Bedieneinheit 1 die im Berechtigungsdatenspeicher 8 abgespeicherten Berechtigungsdaten nur mit örtlich entfernt angeordneten Bedieneinheiten 1' zu synchronisieren, welche als Slave definiert sind, und im Fall einer als Slave definierten Bedieneinheit 1 die im Berechtigungsdatenspeicher 8 abgespeicherten Berechtigungsdaten nur mit einer örtlich entfernt angeordneten Bedieneinheit 1' zu synchronisieren, welche als Master definiert ist.

In einer Ausführungsvariante wird sichergestellt, dass zum Bedienen der Produktionsanlage 2 mit mehreren Bedieneinheiten 1, 1' nur eine einzige Bedieneinheit 1, 1' als Master und alle anderen als Slave definiert ist, beispielsweise indem im Master/Slave Register 14 entsprechende Daten abgespeichert werden, indem ein Master aufgrund eines Broadcast dynamisch definiert wird, etc. Beispielsweise für eine Bedieneinheit 1, 1' welche als Slave definiert ist werden beim Einschalten, bei der Verfügbarkeit eines Netzwerks 9, beim Aufstarten eines neuen Bedienmoduls 51, 52, 53, 54 etc. die Berechtigungsdaten mit dem Master synchronisiert, wobei der Master anschliessend mit allen anderen Slaves eine Synchronisation durchführt. Damit ist sichergestellt, dass die Berechtigungsdaten auf allen Bedieneinheiten 1, 1' identisch sind und betreffende Bedienmodule 51, 52, 53, 54 durch einen Benutzer identisch bedienbar sind.

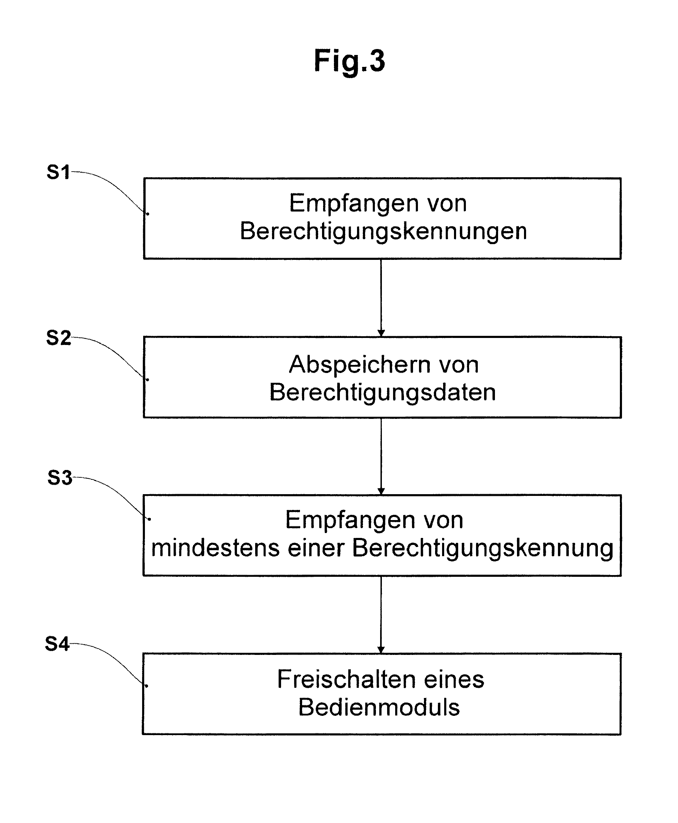

Figur 3 zeigt schematisch ein Flussdiagramm mit einer Sequenz möglicher Schritte zum Betreiben einer Bedieneinheit 1 für eine Produktionsanlage 2. In Schritt S1 werden Berechtigungskennungen 61, 62, 63, 64 empfangen, welche von einem oder mehreren Bedienmodulen 51, 52, 53, 54 der Bedieneinheit 1 ausgesendet werden. In Schritt S2 werden Berechtigungsdaten mit Zuordnungen von Benutzerkennungen 31, 32, 33, 34, 41, 42 zu den empfangenen Berechtigungskennungen 61, 62, 63, 64 in einem Berechtigungsdatenspeicher 8 abgespeichert. In Schritt S3 werden mindestens eine Berechtigungskennung 61, 62, 63, 64 von den Bedienmodulen 51, 52, 53, 54 empfangen sowie mindestens eine Benutzerkennung 31, 32, 33, 34, 41, 42 ermittelt. In Schritt S4 wird ein Bedienmodul 51, 52, 53, 54, von welchem eine Berechtigungskennung 61, 62, 63, 64 empfangen wurde, für einen durch die mindestens eine Benutzerkennung 31, 32, 33, 34, 41, 42 definierten Benutzer freigeschaltet, falls im Berechtigungsdatenspeicher 8 eine Zuordnung der mindestens einen Benutzerkennung 31, 32, 33, 34, 41, 42 zu der mindestens einen Berechtigungskennung 61, 62, 63, 64 abgespeichert ist.

## Patentansprüche

1. Eine Bedieneinheit (1) für eine Produktionsanlage (2), umfassend:
ein Berechtigungsempfangsmodul (71), welches eingerichtet ist, Berechtigungskennungen (61, 62, 63, 64) zu empfangen, welche von Bedienmodulen (51, 52, 53, 54) der Bedieneinheit (1) ausgesendet werden,
ein Berechtigungsspeichermodul (72), welches eingerichtet ist, in einem Berechtigungsdatenspeicher (8) Berechtigungsdaten mit Zuordnungen von Benutzerkennungen (31, 32, 33, 34, 41, 42) zu den empfangenen Berechtigungskennungen (61, 62, 63, 64) abzuspeichern,
ein Berechtigungsprüfmodul (73), welches eingerichtet ist, von den Bedienmodulen (51, 52, 53, 54) mindestens eine Berechtigungskennung (61, 62, 63, 64) zu empfangen sowie mindestens eine Benutzerkennung (31, 32, 33, 34, 41, 42) zu ermitteln und ein Bedienmodul (51, 52, 53, 54), von welchem eine Berechtigungskennung (61, 62, 63, 64) empfangen wurde, einem durch die mindestens eine Benutzerkennung (31, 32, 33, 34, 41, 42) definierten Benutzer freizuschalten, falls im Berechtigungsdatenspeicher (8) eine Zuordnung der mindestens einen Benutzerkennung (31, 32, 33, 34, 41, 42) zu der mindestens einen Berechtigungskennung (61, 62, 63, 64) abgespeichert ist.

2. Die Bedieneinheit (1) nach Anspruch 1, **dadurch gekennzeichnet, dass** das Berechtigungsprüfmodul (73) eingerichtet ist, die mindestens eine Benutzerkennung (31, 32, 33, 34, 41, 42) aufgrund einer oder mehrerer der folgenden Vorgänge zu ermitteln: Anfrage der Benutzerkennung (31, 32, 33, 34, 41, 42) bei einem Benutzerkennungsmodul (12) der Bedieneinheit (1), Empfang der Benutzerkennung (31, 32, 33, 34, 41, 42) von einem Benutzervalidierungsmodul (13) der Bedieneinheit (1), Empfang der Benutzerkennung (31, 32, 33, 34, 41, 42) von einem Bedienmodul (51, 52, 53, 54) der Bedieneinheit (1).

3. Die Bedieneinheit (1) nach Anspruch 1 oder 2, **dadurch gekennzeichnet, dass** das Berechtigungsspeichermodul (72) eingerichtet ist, mit einer Benutzerschnittstelle der Bedieneinheit (1) zusammenzuwirken, um von einem Benutzer Angaben über die Zuordnung von Benutzerkennungen (31, 32, 33, 34, 41, 42) zu Berechtigungskennungen (61, 62, 63, 64) anzufordern und die Zuordnungen im Berechtigungsdatenspeicher (8) entsprechend vorzunehmen.

4. Die Bedieneinheit (1) nach einem der Ansprüche 1 bis 3, **dadurch gekennzeichnet, dass** das Berechtigungsspeichermodul (72) eingerichtet ist, im Berechtigungsdatenspeicher (8) Berechtigungsdaten mit Zuordnungen von Benutzerkennungen (31, 32, 33, 34, 41, 42) zu den empfangenen Berechtigungskennungen (61, 62, 63, 64) als Zuordnungen von Benutzernamen (31, 32, 33, 34) zu Benutzerrollen (41, 42) sowie Zuordnungen von Benutzerrollen (41, 42) zu Berechtigungskennungen (61, 62, 63, 64) abzuspeichern.

5. Die Bedieneinheit (1) nach einem der Ansprüche 1 bis 4, **dadurch gekennzeichnet, dass** das Berechtigungsspeichermodul (72) eingerichtet ist, die im Berechtigungsdatenspeicher (8) abgespeicherten Berechtigungsdaten vor missbräuchlicher Änderung mit einer elektronischen Signatur zu versehen.

6. Die Bedieneinheit (1) nach einem der Ansprüche 1 bis 5, weiter umfassend: ein Synchronisationsmodul (90), welches eingerichtet ist, die im Berechtigungsdatenspeicher (8) abgespeicherten Berechtigungsdaten mit Berechtigungsdaten zu synchronisieren, welche in einem örtlich entfernt angeordneten Berechtigungsdatenspeicher (8') einer örtlich entfernt angeordneten Bedieneinheit (1') abgespeichert sind.

7. Die Bedieneinheit (1) nach Anspruch 6, weiter umfassend ein Master/Slave Register (14), welches eingerichtet ist, die Bedieneinheit (1) als Master oder als Slave zu definieren, wobei das Synchronisationsmodul (90) eingerichtet ist, im Fall einer als Master definierten Bedieneinheit (1) die im Berechtigungsdatenspeicher (8) abgespeicherten Berechtigungsdaten nur mit örtlich entfernt angeordneten Bedieneinheiten (1') zu synchronisieren, welche als Slave definiert sind, und im Fall einer als Slave definierten Bedieneinheit (1) die im Berechtigungsdatenspeicher (8) abgespeicherten Berechtigungsdaten nur mit einer örtlich entfernt angeordneten Bedieneinheit (1') zu synchronisieren, welche als Master definiert ist.

8. Die Bedieneinheit (1) nach Anspruch 6 oder 7, **dadurch gekennzeichnet, dass** das Synchronisationsmodul (90) eingerichtet ist, die Synchronisation zwischen der im Berechtigungsdatenspeicher (8) abgespeicherten Berechtigungsdaten und in einem örtlich entfernt angeordneten Berechtigungsdatenspeicher (8') abgespeicherten Berechtigungsdaten einer örtlich entfernt angeordneten Bedieneinheit (1') aufgrund eines oder mehrerer der folgenden Ereignisse auszulösen: Ablauf eines Zeitintervalls, Empfang eines Triggersignals zur Synchronisation, Detektion von Änderungen von im Berechtigungsdatenspeicher (8) abgespeicherten Berechtigungsdaten, Detektion der Verfügbarkeit des Zugriffs einer Netzwerkschnittstelle (91) der Bedieneinheit (1) auf ein Kommunikationsnetz (9).

9. Die Bedieneinheit (1) nach einem der Ansprüche 6 bis 8, **dadurch gekennzeichnet, dass** das Berechtigungsspeichermodul (72) eingerichtet ist, nach dem Abspeichern von Berechtigungsdaten im Berechtigungsdatenspeicher (8) dem Synchronisationsmodul (90) eines Triggersignals zur Synchronisation der Berechtigungsdaten mit in einem Berechtigungsdatenspeicher (8') abgespeicherten Berechtigungsdaten einer örtlich entfernt angeordneten Bedieneinheit (1') zu übermitteln.

10. Ein Verfahren zum Betreiben einer Bedieneinheit (1) für eine Produktionsanlage (2), umfassend:
Empfangen von Berechtigungskennungen (61, 62, 63, 64), welche von Bedienmodulen (51, 52, 53, 54) der Bedieneinheit (1) ausgesendet werden,
Abspeichern von Berechtigungsdaten mit Zuordnungen von Benutzerkennungen (31, 32, 33, 34, 41, 42) zu den empfangenen Berechtigungskennungen (61, 62, 63, 64) in einem Berechtigungsdatenspeicher (8),
Empfangen von mindestens einer Berechtigungskennung (61, 62, 63, 64) von den Bedienmodulen (51, 52, 53, 54) sowie Ermitteln von mindestens einer Benutzerkennung (31, 32, 33, 34, 41, 42) und Freischalten eines Bedienmoduls (51, 52, 53, 54), von welchem eine Berechtigungskennung (61, 62, 63, 64) empfangen wurde, für einen durch die mindestens eine Benutzerkennung (31, 32, 33, 34, 41, 42) definierten Benutzer, falls im Berechtigungsdatenspeicher (8) eine Zuordnung der mindestens einen Benutzerkennung (31, 32, 33, 34, 41, 42) zu der mindestens einen Berechtigungskennung (61, 62, 63, 64) abgespeichert ist.

11. Das Verfahren nach Anspruch 10, **dadurch gekennzeichnet, dass** die mindestens eine Benutzerkennung (31, 32, 33, 34, 41, 42) aufgrund einer oder mehrerer der folgenden Vorgänge ermittelt wird: Anfrage der Benutzerkennung (31, 32, 33, 34, 41, 42) bei einem Benutzerkennungsmodul (12) der Bedieneinheit (1), Empfang der Benutzerkennung (31, 32, 33, 34, 41, 42) von einem Benutzervalidierungsmodul (13) der Bedieneinheit (1), Empfang der Benutzerkennung (31, 32, 33, 34, 41, 42) von einem Bedienmodul (51, 52, 53, 54) der Bedieneinheit (1).

12. Das Verfahren nach Anspruch 10 oder 11, **dadurch gekennzeichnet, dass** durch das Zusammenwirken mit einer Benutzerschnittstelle der Bedieneinheit (1) von einem Benutzer Angaben über die Zuordnung von Benutzerkennungen (31, 32, 33, 34, 41, 42) zu Berechtigungskennungen (61, 62, 63, 64) angefordert und die Zuordnungen im Berechtigungsdatenspeicher (8) entsprechend vorgenommen werden.

13. Das Verfahren nach einem der Ansprüche 10 bis 12, **dadurch gekennzeichnet**, im Berechtigungsdatenspeicher (8) Berechtigungsdaten mit Zuordnungen von Benutzerkennungen (31, 32, 33, 34, 41, 42) zu den empfangenen Berechtigungskennungen (61, 62, 63, 64) als Zuordnungen von Benutzernamen (31, 32, 33, 34) zu Benutzerrollen (41, 42) sowie Zuordnungen von Benutzerrollen (41, 42) zu Berechtigungskennungen (61, 62, 63, 64) abgespeichert werden.

14. Das Verfahren nach einem der Ansprüche 10 bis 13, **dadurch gekennzeichnet, dass** die im Berechtigungsdatenspeicher (8) abgespeicherten Berechtigungsdaten vor missbräuchlicher Änderung mit einer elektronischen Signatur versehen werden.

15. Das Verfahren nach einem der Ansprüche 10 bis 14, **dadurch gekennzeichnet, dass** mit einem Synchronisationsmodul (90) die im Berechtigungsdatenspeicher (8) abgespeicherten Berechtigungsdaten mit Berechtigungsdaten synchronisiert werden, welche in einem örtlich entfernt angeordneten Berechtigungsdatenspeicher (8') einer örtlich entfernt angeordneten Bedieneinheit (1') abgespeichert sind.

16. Das Verfahren nach Anspruch 15, **dadurch gekennzeichnet, dass** die Bedieneinheit (1) als Master oder als Slave definiert wird, wobei im Fall einer als Master definierten Bedieneinheit (1) die im Berechtigungsdatenspeicher (8) abgespeicherten Berechtigungsdaten nur mit örtlich entfernt angeordneten Bedieneinheiten (1') synchronisiert werden, welche als Slave definiert sind, und im Fall einer als Slave definierten Bedieneinheit (1) die im Berechtigungsdatenspeicher (8) abgespeicherten Berechtigungsdaten nur mit einer örtlich entfernt angeordneten Bedieneinheit (1') synchronisiert werden, welche als Master definiert ist.

17. Das Verfahren nach Anspruch 15 oder 16, **dadurch gekennzeichnet, dass** im Synchronisationsmodul (90) die Synchronisation zwischen der im Berechtigungsdatenspeicher (8) abgespeicherten Berechtigungsdaten und in einem örtlich entfernt angeordneten Berechtigungsdatenspeicher (8') abgespeicherten Berechtigungsdaten einer örtlich entfernt angeordneten Bedieneinheit (1') aufgrund eines oder mehrerer der folgenden Ereignisse ausgelöst wird: Ablauf eines Zeitintervalls, Empfang eines Triggersignals zur Synchronisation, Detektion von Änderungen von im Berechtigungsdatenspeicher (8) abgespeicherten Berechtigungsdaten, Detektion der Verfügbarkeit des Zugriffs einer Netzwerkschnittstelle (91) der Bedieneinheit (1) auf ein Kommunikationsnetz (9).

18. Das Verfahren nach einem der Ansprüche 15 bis 17, **dadurch gekennzeichnet, dass** nach dem Abspeichern von Berechtigungsdaten im Berechtigungsdatenspeicher (8) dem Synchronisationsmodul (90) eines Triggersignals zur Synchronisation der Berechtigungsdaten mit in einem Berechtigungsdatenspeicher (8') abgespeicherten Berechtigungsdaten einer örtlich entfernt angeordneten Bedieneinheit (1') übermittelt wird.

19. Ein Computerprogrammprodukt, umfassend ein greifbares computerlesbares Speichermedium mit gespeichertem Computercode, welcher eingerichtet ist, einen oder mehrere Prozessoren einer Bedieneinheit (1) für eine Produktionsanlage (2) so zu steuern, dass:
Berechtigungskennungen (61, 62, 63, 64), welche von Bedienmodulen (51, 52, 53, 54) der Bedieneinheit (1) ausgesendet werden, empfangen werden,
Berechtigungsdaten mit Zuordnungen von Benutzerkennungen (31, 32, 33, 34, 41, 42) zu den empfangenen Berechtigungskennungen (61, 62, 63, 64) in einem Berechtigungsdatenspeicher (8) abgespeichert werden,
von den Bedienmodulen (51, 52, 53, 54) mindestens eine Berechtigungskennung (61, 62, 63, 64) empfangen wird sowie mindestens eine Benutzerkennung (31, 32, 33, 34, 41, 42) ermittelt wird und ein Bedienmodul (51, 52, 53, 54), von welchem eine Berechtigungskennung (61, 62, 63, 64) empfangen wurde, für einen durch die mindestens eine Benutzerkennung (31, 32, 33, 34, 41, 42) definierten Benutzer freigeschaltet wird, falls im Berechtigungsdatenspeicher (8) eine Zuordnung der mindestens einen Benutzerkennung (31, 32, 33, 34, 41, 42) zu der mindestens einen Berechtigungskennung (61, 62, 63, 64) abgespeichert ist.
